# DEMANDE DE BREVET EUROPEEN

(11) **EP 4 368 589 A1**
(43) Date de publication de la demande: **15.05.2024**
(21) Numéro de dépôt: 23207861.8
(22) Date de dépôt: 06.11.2023
(51) Int. Cl.: C03C 3/32, C03C 8/04, C03C 29/00

(54) **VERRES POUR CONNECTEUR HERMETIQUE MINIATURE**

(30) Priorité: 08.11.2022 FR 2211584
(71) Demandeur: AXON CABLE, 51210 Montmirail (FR)
(72) Inventeur: NOIZET, Guillaume, 51210 MONTMIRAIL (FR); YU, Ning, 51210 MONTMIRAIL (FR)
(74) Mandataire: Cabinet Beau de Loménie

(57) **Abrégé**

La présente invention concerne une composition de verre à base d'oxyde de tellure pour le scellement métal-verre-métal d'alliages ou de métaux ayant un coefficient de dilatation thermique supérieur à 16ppm/°C, ladite composition comprenant, en pourcentage molaire de 60,0 à 85,0 % deTeO₂, de 10,0 à 30,0 % de ZnO, de 5,0 à 25,0% de Na₂O, et les éventuelles impuretés inévitables, ladite composition étant essentiellement exempte d'oxyde de plomb, d'oxyde de titane, d'oxyde de vanadium, de Bi₂O₃ et de La₂O₃. Elle concerne de plus l'utilisation de la composition de verre selon l'invention pour le scellement métal-verre-métal du cuivre ou d'un alliage de cuivre ou d'un alliage de métaux précieux avec un alliage ou un métal ayant un coefficient de dilatation thermique supérieur à 16ppm/°C, en particulier les alliages d'aluminium. Elle concerne en outre un connecteur comprenant un contact en cuivre ou en alliage de cuivre ou en alliage de métaux précieux, un boîtier en métal ou alliage ayant un coefficient de dilatation thermique supérieur à 16ppm/°C et en tant que matériau de scellement métal-verre-métal entre le contact et le boîtier un verre à base d'oxyde de tellure ayant la composition selon l'invention. Enfin elle concerne un procédé de scellement métal-verre-métal d'un contact en cuivre ou en alliage de cuivre dans un boîtier en métal ou alliage ayant un coefficient de dilatation thermique supérieur à 16ppmj°C.

## Description

### Domaine Technique

La présente invention concerne des compositions de verres à base d'oxyde de tellure pour le scellement métal-verre-métal et son utilisation dans des connecteurs hermétiques tels que des connecteurs nano-D hermétiques.

### Technique antérieure

La norme Mil-DTL-83513 (décembre 2020) définit une famille de connecteurs rectangulaires mâles et femelles qui présentent une forme extérieure comme la lettre D, appelée couramment connecteur micro-D. Les micro-D sont caractérisés par un pas de 1,27 mm représentant la distance entraxe entre 2 points de connexion adjacents quelconques. La norme définit aussi explicitement le nombre de points de connexion ou de contacts qui sont respectivement de 9, 15, 21, 25, 31, 37, 51, 69 et 100. Ces contacts sont disposés dans chaque connecteur en 2, 3 ou 4 rangées.

Pour certaines applications dans des conditions extrêmes, on utilise des connexions dites hermétiques afin d'augmenter la tenue à des environnements sévères et la durée de vie de modules électroniques, en référant comme méthode de test la norme MIL-STD-883-1024 (septembre 2019).

Les connecteurs hermétiques sont ainsi souvent utilisés pour assurer des liaisons électriques dans des équipements sous vide. Dans ces dispositifs, la durée de vie des composants est souvent liée au maintien du vide car les appareillages sont souvent sensibles (spectromètre...). Ces connecteurs peuvent également séparer deux compartiments contenant des gaz différents qui ne doivent pas se mélanger ou ne doivent pas sortir du compartiment.

De par la sensibilité de plus en plus grande des appareillages, les taux de fuite maximum demandés pour ces connecteurs sont de plus en plus faibles. Pour pouvoir mesurer des taux de fuite très faibles, c'est-à-dire en dessous de 1×10⁻⁹mbar.l/s, un détecteur de fuite à l'hélium est utilisé. L'hélium est le plus petit atome après l'hydrogène et existe sous forme de gaz inerte, à seulement 5ppm dans l'atmosphère.

La norme MIL-STD-883 (septembre 2019) est l'une des normes explicitant la méthode de mesure de l'herméticité pour les composants électroniques. Plus précisément celle-ci consiste à mesurer le taux de fuite d'hélium à travers un composant (un connecteur dans le présent cas) à tester dans une chambre sous pression. Afin d'assurer la sensibilité du test ladite norme impose une pression à l'intérieur de la chambre de 0,1 torr, soit 0,13 mbar. Cette chambre est reliée à un spectromètre de masse calibré pour mesurer ledit taux de fuite d'hélium. La calibration doit être faite à chaque période d'utilisation, grâce à une fuite calibrée de type diffusion. L'étanchéité du montage doit être vérifiée avec une plaque métallique plane. Ceci est réalisé en aspergeant la plaque d'hélium à l'aide d'un pistolet. Si le détecteur ne détecte pas d'hélium lors de cette vérification, le montage est correct et les pièces peuvent être testées de la même manière. Ainsi, lors du test on asperge de l'hélium à l'aide d'un pistolet sur le connecteur à tester qui est fixé sur la chambre de manière hermétique en utilisant un joint d'étanchéité et un serrage adapté, et on obtient la valeur du taux de fuite du spectromètre de masse calibré.

En fait l'herméticité d'un connecteur dépend directement de la qualité de scellement entre les composants conducteurs et isolants qui elle dépend du niveau de compatibilité en coefficient de dilatation thermique CTE (Coefficient of Thermal Expansion en anglais) entre les desdits composants. On entend le niveau de compatibilité par l'écart des CTE exprimés en ppm/°C entre les composants à sceller. Plus faible est l'écart, meilleure est la qualité de scellement.

Dans le cas des connecteurs micro-D courants, la norme Mil-DTL-83513 (décembre 2020) stipule les alliages cuivreux pour leurs contacts mâle et femelle qui reçoivent comme traitement de surface une sous-couche de nickel et une couche d'or, et les aciers inoxydables passivés ou les alliages d'aluminium nickelés pour leur boîtier.

La demande de brevet FR3036396 de la demanderesse décrit une gamme des connecteurs micro-D hermétiques conformes à la norme précitée. Ces connecteurs, composés de contacts en alliage de cuivre au béryllium, d'isolants en verre d'oxyde de tellure et de boîtier en acier inoxydable ou en alliage d'aluminium, présentent un niveau d'herméticité de 10⁻¹¹ mbar.l/s.

La demande de brevet FR3083794 de la demanderesse décrit une famille des verres à base d'oxydes de tellure TeO₂, de zinc ZnO et de titane TiO₂, dits verres TZT, pouvant être utilisés pour réaliser les connecteurs micro-D hermétiques.

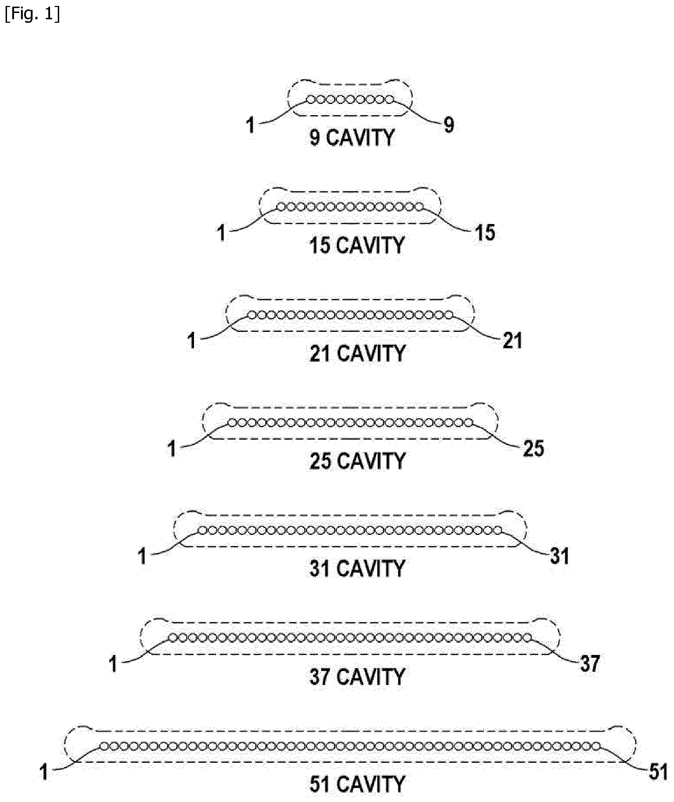

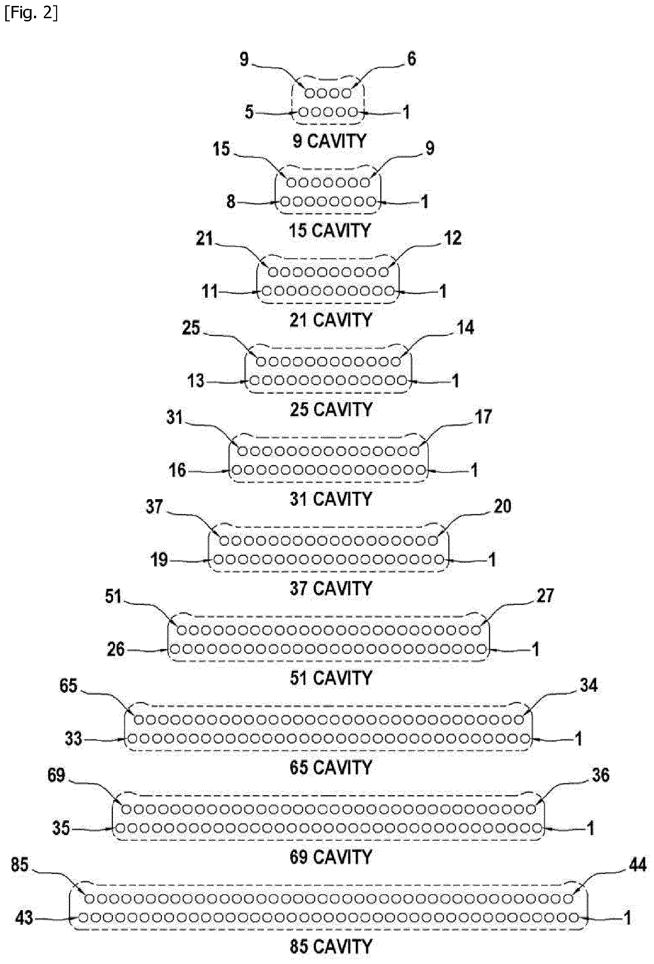

La toute récente norme Mil-DTL-32139 (avril 2021) remet à jour la spécification d'une autre famille de connecteurs rectangulaires mâles et femelles sous forme de D et dont les contacts sont disposés en une ou deux rangées. Ces connecteurs dits nano-D, étant encore plus miniatures que les connecteurs micro-D, se caractérisent par une distance entre-axe entre deux contacts voisins de même rangée de 0,635mm. Dans cette norme le nombre de points de connexion ou de contacts est de 9, 15, 21, 25, 31, 37, 51 pour la version en 1 rangée et de 9, 15, 21, 25, 31, 37, 51 65, 69 et 85 pour la version en 2 rangées, comme le montrent les Figures 1 et 2.

Les connecteurs nano-D présentent donc une densité de points de connexion encore plus élevée tout en gardant les caractéristiques fonctionnelles assez similaires à celles de micro-D. Ci-dessous dans le Tableau 1 sont comparées les principales performances définies dans la norme Mil-DTL-83513 (décembre 2020) pour micro-D et celles par la norme Mil-DTL-32139 (avril 2021) pour nano-D, ainsi que les méthodes de test pour évaluer ces caractéristiques définies dans la norme EIA-364 (juillet 2021).

**[Tableau 1]**

| **Caractéristique** | | **Performance micro-D Norme Mil-DTL-83513** | **Performance nano-D Norme Mil-DTL-32139** | **Méthode Test** |
|---|---|---|---|---|
| 1- Intensité admise | | 3 A max. | 1 A max. | EIA-364-70 |
| 2- Résistance contact | | 8 mΩ max. | 71 mΩ max. | EIA-364-06 |
| 3- Résistance d'isolation | | 5000 MΩ min. | 5000 MΩ min. | EIA-364-21 |
| 4- Rigidité diélectrique | | | | EIA-364-20 |
| | Niveau mer 0 m | 600 Vac | 250 Vac | |
| | Altitude 20 km | 150 Vac | 100 Vac | |
| 5- Force insertion désinsertion | | 283g × nombre contact | 198g × nombre contact | EIA-364-13 |
| 6- Durabilité | | 500 cycles insertion | 200 cycles insertion | EIA-364-09 |
| 7- Tenue température | | | | |
| | Standard | -55°C / 150°C | -55°C / 150°C | |
| | Haute température | -55°C / 200°C | -55°C / 200°C | |
| 8- Tenue chocs thermiques | | -55°C / 125°C, 5 cycles | -55°C / 125°C, 5 cycles | EIA-364-02 |
| 9- Tenue brouillard salin | | 48 h | 48 h | EIA-364-26 Test condition B |
| 10- Tenue humidité | | Résistance d'isolation > 1MΩ | Résistance d'isolation > 1MΩ | EIA-364-31 Test condition B |

Une des difficultés pour la réalisation des connecteurs nano-D hermétiques par rapport aux connecteurs micro-D hermétiques provient de la disposition géométrique de contacts imposée par les normes. Dans le cas des connecteurs micro-D la distance séparant deux contacts adjacents quelconques est uniformément identique (de 1,27 mm), alors que ce n'est pas le cas des connecteurs nano-D dans lesquels cette distance entre-axe de 0,635 mm ne se conserve que pour les contacts de même rang. Cette anisotropie géographique des connecteurs nano-D conduit par conséquent à une anisotropie dilatométrique en contraintes thermomécaniques lors du scellement métal-verre-métal. En d'autres termes l'obtention des connecteurs nano-D hermétiques est techniquement beaucoup plus difficile que celle des connecteurs micro-D.

On comprend donc pourquoi la mise en oeuvre des connecteurs nano-D est plus exigeante, nécessitant un procédé de fabrication d'une plus grande précision. Ceci est d'autant plus vrai lorsqu'il s'agit de connecteurs nano-D hermétiques.

Quant aux composants métalliques des connecteurs nano-D, la norme Mil-DTL-32139, (avril 2021) stipule pour leurs contacts mâle et femelle les alliages cuivreux revêtus de nickel et d'or comme dans le cas du connecteur micro-D ou les alliages de métaux précieux, et pour leur boîtier les aciers inoxydables passivés ou les alliages d'aluminium nickelés tout comme les connecteurs micro-D.

On résume dans le tableau 2 ci-dessous les matériaux métalliques définis dans les normes des connecteurs micro-D et nano-D.

**[Tableau 2]**

| | **Connecteur micro-D Norme Mil-DTL-83513** | **Connecteur nano-D Norme Mil-DTL-32139** |
|---|---|---|
| Matériaux contact femelle | 1) alliages cuivreux nickelés et dorés | 1) alliages cuivreux nickelés et dorés |
| | | 2) alliages métaux précieux |
| Matériaux boîtier | 1) aciers inoxydables | 1) aciers inoxydables |
| | 2) alliages d'aluminium | 2) alliages d'aluminium |

Si on veut réaliser des connecteurs nano-D hermétiques, il faut donc trouver un verre mieux adapté au scellement métal-verre-métal de
1)- alliage cuivreux / verre / acier inoxydable ;
2)- alliage cuivreux / verre / alliage d'aluminium ;
3)- alliage métaux précieux / verre / acier inoxydable et
4)- alliage métaux précieux / verre / alliage d'aluminium.

On sait que la famille des verres TZT décrits dans la demande de brevet de la demanderesse FR3083794 présente un coefficient de dilatation thermique CTE dans une plage allant de 13 à 16 ppm/°C, une température de transition vitreuse Tg (glass température) allant de 330°C à 380°C et une tendance de recristallisation dans une plage de température de 490°C à 535°C. Ces propriétés font que les verres TZT ne sont pas idéals pour la réalisation des connecteurs nano-D hermétiques.

Un autre souci lié aux verres TZT réside dans le fait que le composant TiO₂ commence à faire l'objet de réglementation européenne pour ses risques en santé publique et à l'environnement, par exemple son classement en catégorie cat2 comme risque carcinogène par une réglementation européenne en Octobre 2021.

Il est donc souhaitable de trouver un système de verre autre que celui de TZT qui présente les propriétés telles qu'un CTE plus favorable, en particulier pour le scellement 2) alliage cuivreux / verre / alliage d'aluminium et 4) alliage métaux précieux / verre / alliage d'aluminium.

Sachant que les alliages cuivreux impliqués dans la norme Mil-DTL-32139 (avril 2021) présentent un CTE de 16,8 à 17,8 ppm/°C, les alliages de métaux précieux un CTE de 16,2 à 16,6 ppm/°C, les aciers inoxydables 304 et 316 un CTE de 17,1 à 17,4 ppm/°C et les alliages d'aluminium un CTE de 22 à 26 ppm/°C, il est donc plus judicieux d'intercaler entre les contacts et le boîtier un verre isolant qui présente un CTE intermédiaire. Ceci est d'autant plus vrai dans le cas de la fabrication des connecteurs nano-D hermétiques de boîtier en alliage d'aluminium.

En fait, en vue de poursuivre la tendance de miniaturisation et d'allégement en électronique de pointe, la réalisation de connecteurs à la fois miniatures et hermétiques comportant en plus un boîtier en alliage d'aluminium présente un intérêt particulier pour certaines applications et relève un important défi technologique, puisqu'aucun connecteur de ce type n'existe actuellement sur le marché.

Par ailleurs, il est de plus en plus important que le connecteur soit conforme à la directive RoHS (Restriction of Hazardous Substances). Le respect de la directive RoHS implique donc que le verre utilisé pour le scellement métal-verre-métal des contacts dans le boîtier du connecteur soit sans oxyde de plomb, ni aucun autre composé dont l'utilisation est restreinte par cette directive.

Des verres à base d'oxyde de tellure ont été décrits dans l'art antérieur pour le scellement métal-verre-métal de boîtiers de semi-conducteurs (US4945071, US4743302, US5013697, US5116786). Toutefois ces verres incluent de l'oxyde de plomb ce qui ne respecte pas la directive RoHS.

Seule la demande WO9310052 décrit un verre à base d'oxyde de tellure sans oxyde de plomb. Toutefois ce verre est un système binaire oxyde de tellure - oxyde de vanadium et ne suggère donc à aucun moment qu'il soit possible de supprimer l'oxyde de vanadium de sa composition. En outre de tels verres ne sont pas disponibles commercialement. Par ailleurs ce document suggère quand même l'addition d'oxyde de plomb et indique uniquement que ce type de verre peut être utilisé dans le scellement de semi-conducteurs à base de céramique. Il ne suggère donc à aucun moment qu'il puisse être utile dans le scellement métal-verre-métal de l'aluminium ou d'alliages d'aluminium et encore moins dans le cas des connecteurs micro-D ou nano-D.

Les demandes de brevets US4652536 et WO2008/050819 décrivent également des verres à base d'oxyde de tellure comportant obligatoirement soit du Bi₂O₃, soit du La₂O₃. Il s'agit en fait de verres optiques acoustiques (US4652536) ou des verres optiques (WO2008/050819) dont les caractéristiques fonctionnelles n'ont rien à voir avec celles recherchées dans la cadre de la présente invention. En effet seules les propriétés optiques ou optiques acoustiques sont décrites dans ces demandes, les aspects physicochimiques du verre dans le scellement métal-verre-métal tels que la dilatation thermique, n'étant pas du tout abordés.

Les inventeurs se sont aperçus de façon surprenante qu'il était possible d'utiliser des verres à base d'oxyde de tellure, sans oxyde de plomb ni oxyde de vanadium, ni oxyde de titane, ni Bi₂O₃, ni La₂O₃, pour le scellement métal-verre-métal de contacts dans un boîtier, en particulier de connecteurs type micro-D ou nano-D, plus particulièrement nano-D, de façon à obtenir des connecteurs hermétiques et respectant la directive RoHS, tout en utilisant des contacts en cuivre ou alliage de cuivre ou alliage de métaux précieux et un boîtier en alliage d'aluminium ou en acier inoxydable. Pour cela il était nécessaire que ces verres contiennent du ZnO et du Na₂O. Ces verres contenant ainsi du TeO₂, du ZnO et du Na₂O sont également appelés verres TZN.

### Exposé de l'invention

La présente invention concerne donc une composition de verre à base d'oxyde de tellure pour le scellement métal-verre-métal d'alliages ou de métaux ayant un coefficient de dilatation thermique supérieur à 16ppm/°C, ladite composition comprenant, avantageusement étant essentiellement constituée par, en particulier étant constituée par, en pourcentage molaire :
- de 60,0 à 85,0 % de TeO₂, avantageusement de 65,0 à 83,0 % ;
- de 10,0 à 30,0 % de ZnO, avantageusement de 10,0 à 20,0 % ;
- de 5,0 à 25,0% de Na₂O, avantageusement de 8,0 à 20,0 %,
- et les éventuelles impuretés inévitables,
ladite composition étant essentiellement exempte, en particulier totalement exempte, d'oxyde de plomb, d'oxyde de titane, d'oxyde de vanadium, d'oxyde de bismuth et d'oxyde de lanthane.

Au sens de la présente invention les termes « de ... à » ou « compris entre ... et ... » signifient que les bornes sont incluses dans l'intervalle.

On entend au sens de la présente invention par « scellement métal-verre-métal », le scellement réalisé entre deux métaux ou alliages métalliques, en général différents l'un de l'autre, par l'intermédiaire de verre. Le matériau de scellement est donc constitué de verre, en particulier ayant la composition selon l'invention. Cette liaison implique dans le cas des connecteurs une liaison hermétique qui permet le passage d'une information électrique. L'isolation électrique est donc également sous-entendue.

Au sens de la présente invention, on entend par « température de scellement » la température à laquelle il faut chauffer le verre et les métaux pour obtenir le scellement, c'est à dire pour abaisser la viscosité du verre et créer une liaison entre ces matériaux.

Au sens de la présente invention, on entend par « composition de verre à base d'oxyde de tellure » toute composition de verre dont le composant principal est de l'oxyde de tellure (TeO₂), avantageusement dont le TeO₂ est présent en une teneur supérieure aux autres composants, encore plus avantageusement en une teneur d'au moins 60% en pourcentage molaire.

On entend au sens de la présente invention par « impuretés inévitables », les impuretés qui proviennent des étapes de fabrication de la composition de verre ou des impuretés présentes dans les matières premières utilisées pour la fabrication de la composition de verre. On retrouve toutes les impuretés classiques rencontrées dans les verres à base d'oxyde de tellure et contenant du ZnO et du Na₂O. En particulier les impuretés inévitables, si elles sont présentes, peuvent être choisies parmi le plomb (Pb), le fer (Fe), le cuivre (Cu), l'arsenic (As), l'antimoine (Sb), le calcium (Ca), le carbonate (CO₃), le magnésium (Mg), le potassium (K), le phosphore (P), le chlorure (Cl), le silicium (Si), le soufre (S) et leurs mélanges. La teneur totale en impuretés inévitables est en générale inférieure ou égale à 0,1105% (1105 ppm).

De façon avantageuse les compositions de verre selon l'invention ne comprennent pas de phosphates P₂O₄. En effet les phosphates ont un impact négatif sur la mouillabilité du verre.

Avantageusement, la composition est exempte d'oxyde d'indium et/ou d'oxyde de germanium.

Plus avantageusement, la composition est exempte d'oxyde aluminium et/ou d'oxyde de bore et/ou d'oxyde de phosphore et/ou d'oxyde de lithium et/ou d'oxyde de niobium et/ou d'oxyde de tungstène.

Encore plus avantageusement, la composition est exempte d'oxyde de baryum.

En particulier, la composition est exempte de F et/ou de PbF₂.

La composition selon la présente invention comprend donc, en pourcentage molaire, de 60,0 à 85,0 % deTeO₂, avantageusement de 65,0 à 83,0 %, en particulier de 68,0 à 80,0 %.

La composition selon la présente invention comprend en outre du ZnO.

Le ZnO permet à la composition de verre d'avoir une bonne stabilité. La teneur en ZnO de la composition selon la présente invention en pourcentage molaire est donc de 10,0 à 30,0 %, avantageusement de 10,0 à 20,0%, plus avantageusement de 10,0 à 18,0%.

La composition de verre selon la présente invention comprend en outre du Na₂O. En effet le Na₂O semble avoir un impact sur le CTE. La teneur en Na₂O de la composition selon la présente invention en pourcentage molaire est donc de 5,0 à 25,0%, avantageusement de 8,0 à 20,0 %, plus avantageusement de 10,0 à 15,0%.

Dans un mode de réalisation avantageux, la composition de verre selon la présente invention a un coefficient de dilatation thermique (CTE) compris entre 17 ppm/°C et 20 ppm/°C, avantageusement entre 18 ppm/°C et 20 ppm/°C, encore avantageusement entre 18,5 ppm/°C et 19,9 ppm/°C, encore plus avantageusement entre 18,8 ppm/°C et 19,8 ppm/°C. Dans un mode de réalisation avantageux, la composition de verre selon la présente invention a un CTE intermédiaire entre le CTE du 1^{er} métal ou alliage de métal et celui du 2^{ème} métal ou alliage de métal destiné au scellement métal-verre-métal. En effet, par rapport au système TZT, un CTE plus élevé du système TZN (composition de verre selon l'invention) permet une meilleure compatibilité dilatométrique entre le verre et les matériaux métalliques impliqués en termes de scellement métal-verre-métal.

Le coefficient de dilatation thermique (CTE) est mesuré dans le cadre de la présente invention sur une TMA de chez TA instrument (TMA 2940), avec une rampe de 2°/min de 30°C à 250 °C.

Dans un mode de réalisation avantageux, la température de transition vitreuse Tg de la composition de verre selon la présente invention est comprise entre 280°C et 285°C. Une Tg du système TZN (composition de verre selon l'invention) plus faible en comparaison avec le système TZT va aussi dans le sens favorable du scellement des connecteurs nano-D et micro-D, puisque celle-ci conduit nécessairement à une baisse de la température du procédé de scellement donnant lieu à un impact thermique plus faible lors de la fabrication des connecteurs.

La Tg est mesurée grâce à un DSC (Differential scanning calorimetry): DSC Mettler Toledo, modèle Star. La mesure est effectuée de 20°C à 580 °C avec une rampe de 10°C/min. Les températures Tg et Tx sont les températures onset (de début de phénomène).

Dans un mode de réalisation avantageux, la composition de verre selon la présente invention a une tendance de recristallisation dans une plage de température de 400°C à 470°C.

La température de recristallisation est mesurée grâce à un DSC (Differential scanning calorimetry): DSC Mettler Toledo, modèle Star. La mesure est effectuée de 20°C à 580 °C avec une rampe de 10°C/min.

Des exemples de composition de verre selon la présente invention sont rassemblés dans le tableau 3 ci-dessous :

**[Tableau 3]**

| **verre** | **Composition** | **Tg (°C)** | **CTE (ppm/°C)** |
|---|---|---|---|
| 1 | TeO₂75%-ZnO15%-Na₂O10% | 281 | 18,8 |
| 2 | TeO₂80%-ZnO10%-Na₂O10% | 280 | 19,0 |
| 3 | TeO₂70%-ZnO18%-Na₂O12% | 282 | 19,3 |
| 4 | TeO₂68%-ZnO17%-Na₂O15% | 285 | 19,8 |
| 5 | TeO₂72%-ZnO16%-Na₂O12% | 284 | 19,5 |

Dans un mode de réalisation de la présente invention, l'alliage ou le métal ayant un coefficient de dilatation thermique supérieur à 16ppm/°C est choisi parmi :
- l'aluminium et ses alliages, avantageusement ayant subi un traitement de surface, en particulier nickelé, plus avantageusement les alliages aluminium magnésium ou aluminium magnésium silicium tels que par exemple les alliages des séries 5000 (aluminium magnésium), en particulier les alliages 5083 et 5754, et les alliages des séries 6000 (aluminium magnésium silicium), en particulier l'alliage 6061, de façon particulière l'alliage 5083 et l'alliage 6061, les alliages ayant éventuellement subi un traitement de surface, en particulier nickelé ;
- les aciers inoxydables, en particulier le 304 et le 316, plus particulièrement passivé ;
- le cuivre et les alliages de cuivre ayant éventuellement subi un traitement de surface, en particulier nickelé ou nickelé-doré, avantageusement un alliage cuivre béryllium, tel que l'alliage cuivre-béryllium type 33, encore appelé C17300 (1,8% Be, 0,2% Co et 0,2% minimum de Pb pour l'usinabilité) ou Cu97,5%Be2,0%Co0,5%, ayant éventuellement subi un traitement de surface, en particulier nickelé ou nickelé-doré, ou le laiton (alliage cuivre zinc) ayant éventuellement subi un traitement de surface, en particulier nickelé ou nickelé-doré, en particulier le Cu60%Zn40% ;
- les alliages de métaux précieux, en particulier les alliages ternaires, plus particulièrement or argent cuivre (AuAgCu), encore plus particulièrement Au80%Ag10%Cu10%.

En général, les coefficients de dilatation thermique sont pour:
- les alliages de cuivre : de 16,8 à 17,8 ppm/°C (l'alliage cuivre béryllium de type 33 ayant un CTE de 17,3 ppm/°C),
- les alliages d'aluminium : de 22 à 26 ppm/°C avec :
- l'alliage 5083 : 25,2ppm/°C
- l'alliage 5754 : 24,6ppm/°C
- l'alliage 6061 : 23,4ppm/°C
- les aciers inoxydables : de 17,1 à 17,4 ppm/°C avec :
- l'Inox 304 : 17,1ppm/°C
- l'Inox 316 : 17,4 ppm/°C
- les alliages de métaux précieux : de 16,2 à 16,6 ppm/°C.

La présente invention concerne en outre l'utilisation de la composition de verre selon l'invention, en particulier telle que décrite ci-dessus, pour le scellement métal-verre-métal :
- du cuivre ou d'un alliage de cuivre ou d'un alliage de métaux précieux, avantageusement un alliage cuivre béryllium ou cuivre zinc ou or argent cuivre, le cuivre ou l'alliage de cuivre ayant éventuellement subi un traitement de surface (dépôt d'une couche métallique en surface), en particulier nickelé ou nickelé-doré, avec
- un alliage ou un métal ayant un coefficient de dilatation thermique supérieur à 16ppm/°C, en particulier autre que du cuivre ou qu'un alliage de cuivre ou qu'un alliage de métaux précieux.

Au sens de la présente invention on entend par « cuivre ou alliage de cuivre nickelé» ou « aluminium ou alliage d'aluminium nickelé », tout cuivre ou alliage de cuivre ou tout aluminium ou alliage d'aluminium ayant subi un traitement de surface de façon à déposer une fine couche de nickel à sa surface, en particulier par électrolyse ou par un procédé de dépôt chimique. Cette couche de nickel comprend en général également du phosphore, avantageusement en une teneur en pourcentage molaire comprise entre 5% et 12%, en particulier pour rendre cette couche amagnétique, une teneur en pourcentage molaire comprise entre 10,5% et 12%. L'épaisseur de cette couche est en général comprise entre 1 µm et 20 µm, en particulier :
- dans le cas du cuivre ou de l'alliage de cuivre, entre 1 µm et 15 µm avantageusement entre 1 µm et 7 µm, plus avantageusement d'au moins 1,27 µm
- dans le cas de l'aluminium ou de l'alliage d'aluminium, entre 1 µm et 19 µm, plus avantageusement entre 10 µm et 19 µm, en particulier entre 15 µm et 18 µm.

Cette couche peut être complétée par une couche d'or. On parle alors de « cuivre ou alliage de cuivre nickelé-doré » selon la présente invention. Dans ce cas, chaque couche a avantageusement une épaisseur comprise entre 1 µm et 10 µm, en particulier entre 1 µm et 7 µm, plus avantageusement d'au moins 1,27 µm.

Dans un mode de réalisation avantageux, l'alliage ou métal ayant un coefficient de dilatation thermique supérieur à 16ppm/°C est tel que décrit ci-dessus. En particulier l'alliage ou métal ayant un coefficient de dilatation thermique supérieur à 16ppm/°C autre que du cuivre ou qu'un alliage de cuivre ou qu'un alliage de métaux précieux est choisi parmi l'aluminium et ses alliages et les aciers inoxydables, l'aluminium et ses alliages ayant éventuellement subi un traitement de surface, en particulier nickelé, avantageusement il s'agit d'un alliage d'aluminium, en particulier choisi parmi un alliage aluminium magnésium ou aluminium magnésium silicium, ou d'un acier inoxydable, plus particulièrement tels que décrits ci-dessus.

Dans un mode de réalisation particulièrement avantageux de l'utilisation selon l'invention, le scellement métal-verre-métal est effectué dans un connecteur, avantageusement un connecteur miniature, en particulier un connecteur micro-D (selon la norme Mil-DTL-83513 de décembre 2020) ou nano-D (selon la norme Mil-DTL-32139 d'avril 2021), plus particulièrement un connecteur nano-D (selon la norme Mil-DTL-32139 d'avril 2021), entre
- un contact en cuivre ou en alliage de cuivre ou en alliage de métaux précieux, en particulier en alliage de cuivre tel qu'un alliage cuivre béryllium ou cuivre zinc ou en alliage de métaux précieux en particulier en alliage or argent cuivre, le cuivre ou l'alliage de cuivre ayant éventuellement subi un traitement de surface, en particulier nickelé ou nickelé-doré, et
- un boîtier en métal ou alliage ayant un coefficient de dilatation thermique supérieur à 16ppm/°C, en particulier autre que du cuivre ou qu'un alliage de cuivre ou qu'un alliage de métaux précieux,.

La présente invention concerne de plus un connecteur comprenant :
- un contact en cuivre ou en alliage de cuivre ou en alliage de métaux précieux, avantageusement en alliage cuivre béryllium ou cuivre zinc ou or argent cuivre, le cuivre ou l'alliage de cuivre ayant éventuellement subi un traitement de surface, en particulier nickelé ou nickelé-doré,
- un boîtier en métal ou alliage ayant un coefficient de dilatation thermique supérieur à 16ppm/°C, en particulier autre que du cuivre ou qu'un alliage de cuivre ou qu'un alliage de métaux précieux, et
- un matériau de scellement métal-verre-métal entre le contact et le boîtier, caractérisé en ce que le matériau de scellement est un verre à base d'oxyde de tellure ayant la composition selon l'invention, en particulier telle que décrite ci-dessus.

De façon avantageuse, l'alliage ou métal ayant un coefficient de dilatation thermique supérieur à 16ppm/°C est tel que décrit ci-dessus.

En particulier, le connecteur selon l'invention est un connecteur miniature, plus particulièrement un connecteur micro-D (selon la norme Mil-DTL-83513 de décembre 2020) ou un connecteur nano-D (selon la norme Mil-DTL-32139 d'avril 2021), plus particulièrement un connecteur nano-D (selon la norme Mil-DTL-32139 d'avril 2021).

Dans un mode de réalisation avantageux, le connecteur selon l'invention est hermétique avec un taux de fuite à l'hélium inférieur à 5×10⁻¹² mbar.l/s, mesuré à l'aide d'un détecteur de fuite à l'hélium (ASM 142 d'Adixen) selon les conditions A4 de la norme MIL-STD-883 de septembre 2019.

Dans un autre mode de réalisation avantageux, le connecteur selon l'invention présente une résistance d'isolement entre les contacts et entre chaque contact et le boîtier > 5 Gohms et une tenue diélectrique de 250 V DC, mesurées sur un équipement Cable test, Horizon II, modèle HV4.

Dans encore un autre mode de réalisation avantageux, le connecteur selon l'invention a une température d'utilisation pouvant aller jusqu'à 200 °C.

La présente invention concerne enfin un procédé de scellement métal-verre-métal d'un contact en cuivre ou en alliage de cuivre ou en alliage de métaux précieux, le cuivre ou l'alliage de cuivre ayant éventuellement subi un traitement de surface, en particulier nickelé ou nickelé-doré, dans un boîtier en métal ou alliage ayant un coefficient de dilatation thermique supérieur à 16ppm/°C, en particulier autre que du cuivre ou qu'un alliage de cuivre ou qu'un alliage de métaux précieux, comprenant les étapes successives suivantes
-a) fourniture d'un contact en cuivre ou en alliage de cuivre ou en alliage de métaux précieux, en particulier en alliage cuivre béryllium, cuivre zinc ou or argent cuivre, le cuivre ou l'alliage de cuivre ayant éventuellement subi un traitement de surface, en particulier nickelé ou nickelé-doré, et d'un boîtier en métal ou alliage ayant un coefficient de dilatation thermique supérieur à 16ppm/°C, en particulier autre que du cuivre ou qu'un alliage de cuivre ou qu'un alliage de métaux précieux
-b) fourniture d'une préforme, avantageusement sous forme cylindrique, de verre à base d'oxyde de tellure ayant la composition selon la présente invention et en particulier telle que décrite ci-dessus ;
-c) mise en contact de la préforme avec le contact et avec le boîtier;
-d) maintien du contact de l'ensemble contact - préforme - boîtier à l'aide d'un outillage adapté ;
-e) chauffage de l'ensemble contact - préforme - boîtier à une température et pendant un temps suffisant pour obtenir le scellement métal-verre-métal;
-f) récupération de l'ensemble ainsi scellé.

De façon avantageuse, l'alliage ou métal ayant un coefficient de dilatation thermique supérieur à 16ppm/°C est tel que décrit ci-dessus.

Dans un mode de réalisation particulier du procédé selon la présente invention, la température de l'étape e) est comprise entre 300°C et 380 °C, avantageusement entre 320°C et 370°C, en particulier entre 340°C et 365°C.

Dans un autre mode de réalisation du procédé selon la présente invention la durée de chauffage de l'étape e) est comprise entre 30 minutes et 200 minutes, en particulier entre 45 minutes et 120 minutes, plus particulièrement elle est de 60 minutes.

Le chauffage de l'étape e) peut être réalisé par exemple à l'aide d'un four ou par induction.

L'invention sera mieux comprise à la lumière de la description des figures et des exemples qui suivent.

### Brève description des dessins

[Fig. 1] La figure 1 représente la configuration des connecteurs nano-D en 1 rangée selon la norme Mil-DTL-32139 (avril 2021).
[Fig. 2] La figure 2 représente la configuration des connecteurs nano-D en 2 rangées selon la norme Mil-DTL-32139 (avril 2021).
[Fig. 3] La figure 3 représente un connecteur nano-D hermétique 15 points en 1 rangée tel que réalisé dans les exemples 1 et 2.
[Fig. 4] La figure 4 représente le test de 5 cycles de chocs thermiques avec des paliers de 30 minutes suivant la norme EIA-364-02C (juillet 2021) pour une plage de température de -55°C à +125°C, réalisé dans l'exemple 1 sur le connecteur hermétique.
[Fig. 5] La figure 5 représente un connecteur nano-D hermétique 37 points en 2 rangées tel que réalisé dans les exemples 3 à 5.
[Fig. 6] La figure 6 représente un connecteur micro-D hermétique 15 points en 2 rangées tel que réalisé dans l'exemple 6.
[Fig. 7] La figure 7 représente le test de 5 cycles de chocs thermiques avec des paliers de 30 minutes suivant la norme EIA-364-02C (juillet 2021) pour une plage de température de -55°C à +200°C, réalisé dans l'exemple 6 sur le connecteur hermétique.
[Fig. 8] La figure 8 représente un connecteur micro-D hermétique 51 points en 3 rangées tel que réalisé dans l'exemple 7.

### EXEMPLES

### Exemple 1 : lot de connecteurs nano-D 15 points en 1 rangée dont le verre a la composition selon l'invention (TeO₂75%-ZnO15%-Na₂O10%)

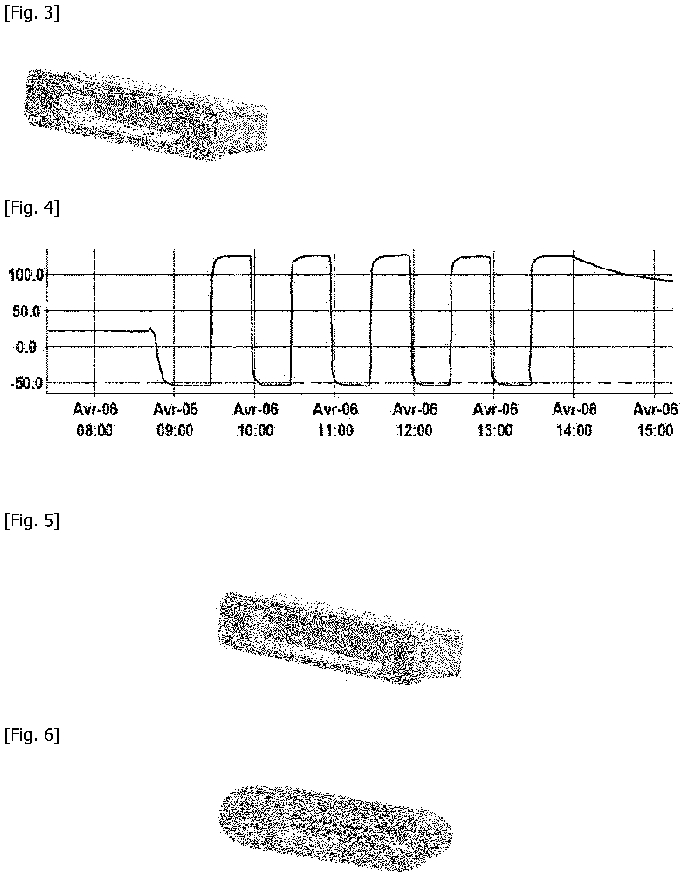

On réalise un lot de 5 connecteurs nano-D (cf. Figure 3) constitués de :
- 15 contacts en alliage Cu97,5%Be2,0%Co0,5% dit CuBe revêtus d'une sous-couche de nickel d'épaisseur de 1,27 µm minimum et une couche d'or d'épaisseur 1,27 µm minimum.
- 15 inserts isolants en verre TZN d'une composition nominale (TeO₂-75%, ZnO-15%, Na₂O-10%).
- 1 boîtier en alliage d'aluminium 5083 nickelé, d'épaisseur de nickel comprise entre 15 µm et 18 µm.

L'assemblage du lot est obtenu par une opération de scellement métal-verre-métal à 350°C pendant 1h, présentant un niveau d'herméticité exprimé en taux de fuite d'hélium inférieur à 5x10⁻¹² mbar.l/s suivant la méthode de mesure définie par la norme MIL-STD-883-1024 (septembre 2019).

Les tests précités dans le Tableau 1 sont réalisés sur le lot. Les résultats sont conformes aux exigences définies dans la norme Mil-DTL-32139 (avril 2021).

Comme on souhaite utiliser ce type de connecteurs dans des applications impliquant d'importantes contraintes thermiques, on élargit le test de 5 cycles de chocs thermiques avec des paliers de 30 minutes suivant la norme EIA-364-02C (juillet 2021) au-delà de la plage de température de -55°C à +125°C (cf. Figure 4), à savoir progressivement dans les plages de température de -55°C à +135°C, de -55°C à +150°C, de -55°C à +160°C, de -55°C à +175°C et de -55°C à +200°C, et puis on mesure après chaque épreuve l'herméticité en utilisant la même méthode de test de la norme MIL-STD-883-1024 (septembre 2019). Les résultats obtenus montrent que l'herméticité du niveau 5x10⁻¹² mbar.l/s est bien conservée après ces tests de chocs thermiques.

Un autre test dit vieillissement thermique sur le lot est aussi mis en oeuvre afin d'évaluer la tenue thermique dans le temps du produit. Il s'agit d'exposer les connecteurs à 230°C pendant 150h, la montée et la descente en température étant régulées à 1°C/min. Le lot de connecteurs après ce test conserve toujours le bon niveau d'herméticité à 5x10⁻¹² mbar.l/s.

### Exemple 2 : lot de connecteurs nano-D 15 points en 1 rangée dont le verre a la composition selon l'invention (TeO₂80%-ZnO10%-Na₂O10%)

En faisant varier la composition du système TZN, on réalise un lot de 5 connecteurs nano-D (cf. Figure 3) constitués de :
- 15 contacts en alliage Au80%Ag10%Cu10% dit précieux.
- 15 inserts isolants en verre TZN d'une composition nominale (TeO₂-80%, ZnO-10%, Na₂O-10%).
- 1 boîtier en alliage d'aluminium 5083 nickelé, d'épaisseur de nickel comprise entre 15 µm et 18 µm.

L'assemblage du lot est obtenu par une opération de scellement métal-verre-métal à 340°C pendant 1h, présentant également le niveau d'herméticité inférieur à 5×10⁻¹² mbar.l/s.

Les tests précités dans le Tableau 1, ainsi que ceux de chocs et vieillissement thermiques, réalisés sur le lot donnent des résultats similaires à l'Exemple 1.

### Exemple 3 : lot de connecteurs nano-D 37 points en 2 rangées dont le verre a la composition selon l'invention (TeO₂70%-ZnO18%-Na₂O12%)

En passant de 15 points à 37 points, on réalise un lot de 5 connecteurs nano-D (cf. Figure 5) constitués de :
- 37 contacts en alliage Cu60%Zn40% dit laiton revêtus d'une sous-couche de nickel d'épaisseur de 1,27 µm minimum et une couche d'or d'épaisseur 1,27 µm minimum.
- 37 inserts isolants en verre d'une composition nominale TeO₂70%-ZnO18%-Na₂O12%.
- 1 boîtier en alliage d'aluminium 5083 nickelé, d'épaisseur de nickel comprise entre 15 µm et 18 µm.

L'assemblage du connecteur est obtenu par une opération de scellement métal-verre-métal à 350°C pendant 1h. Le lot de connecteurs obtenu présente également le niveau d'herméticité inférieur à 5×10⁻¹² mbar.l/s.

Les résultats des tests précités dans le Tableau 1 montrent que l'ensemble des connecteurs est conforme à la norme Mil-DTL-32139 (avril 2021).

Les tests de chocs thermiques au-delà de -55°C à 125°C sont effectués, les résultats obtenus sont similaire à ceux de l'Exemple 1..

Quant au test de vieillissement thermique à 230°C pendant 150h, les résultats obtenus ici sont similaires à l'Exemple 1.

### Exemple 4 : lot de connecteurs nano-D 37 points en 2 rangées dont le verre a la composition selon l'invention (TeO₂68%-ZnO17%-Na₂O15%)

En prenant l'alliage d'aluminium 6061, on réalise un lot de 5 connecteurs nano-D (cf. Figure 5) constitués de :
- 37 contacts en alliage Au80%Ag10%Cu10% dit précieux.
- 37 inserts isolants en verre d'une composition nominale (TeO₂-75%, ZnO-15%, Na₂O-10%).
- 1 boîtier en alliage d'aluminium 6061 nickelé, d'épaisseur de nickel comprise entre 15 µm et 18 µm.

L'assemblage du connecteur est obtenu par une opération de scellement métal-verre-métal à 365°C pendant 1h. Le lot de connecteurs obtenu présente le niveau d'herméticité inférieur à 5×10⁻¹² mbar.l/s.

Les résultats des tests précités dans le Tableau 1 montrent que l'ensemble des connecteurs est conforme à la norme Mil-DTL-32139 (avril 2021).

Quant au test de vieillissement thermique à 230°C pendant 150h, les résultats obtenus ici sont similaires à l'Exemple 1.

### Exemple 5 : lot de connecteurs nano-D 37 points en 2 rangées dont le verre a la composition selon l'invention (TeO₂75%-ZnO15%-Na₂O10%)

En prenant l'acier inoxydable 304, on réalise un lot de 5 connecteurs nano-D (cf. Figure 5) constitués de :
- 37 contacts en alliage Au80%Ag10%Cu10% dit précieux.
- 37 inserts isolants en verre d'une composition nominale (TeO₂-75%, ZnO-15%, Na₂O-10%).
- 1 boîtier en acier inoxydable 304 passivé.

L'assemblage du connecteur est obtenu par une opération de scellement métal-verre-métal à 365°C pendant 1h. Le lot de connecteurs obtenu présente le niveau d'herméticité inférieur à 5×10⁻¹² mbar.l/s.

Les résultats des tests précités dans le Tableau 1 montrent que l'ensemble des connecteurs est conforme à la norme Mil-DTL-32139 (avril 2021).

Quant au test de vieillissement thermique à 230°C pendant 150h, les résultats obtenus ici sont similaires à l'Exemple 1.

### Exemple 6 : lot de connecteurs micro-D 15 points en 2 rangées dont le verre a la composition selon l'invention (TeO₂80%-ZnO10%-Na₂O10%)

Les précédentes réalisations des connecteurs nano-D, très satisfaisantes au niveau d'herméticité, notamment le maintien de celui-ci après les sollicitations thermiques en 5 chocs et en vieillissement à 230°C, conduisent les inventeurs à déployer le système TZN dans la réalisation de connecteurs micro-D hermétiques.

On réalise donc un lot de 2 connecteurs micro-D (cf. Figure 6) constitués de :
- 15 contacts en alliage CuBe revêtus d'une sous-couche de nickel d'épaisseur de 1,27 µm minimum et une couche d'or d'épaisseur 1,27 µm minimum.
- 15 inserts isolants en verre d'une composition nominale (TeO₂-80%, ZnO-10%, Na₂O-10%).
- 1 boîtier en alliage d'aluminium 6061 nickelé, d'épaisseur de nickel comprise entre 15 µm et 18 µm.

L'assemblage du connecteur est obtenu par une opération de scellement métal-verre-métal à 360°C pendant 1h. Le lot de connecteurs obtenu présente le niveau d'herméticité inférieur à 5×10⁻¹² mbar.l/s.

On procède aux tests précités dans le Tableau 1 et constate que l'ensemble des connecteurs est conforme à la norme Mil-DTL-83513 (décembre 2020).

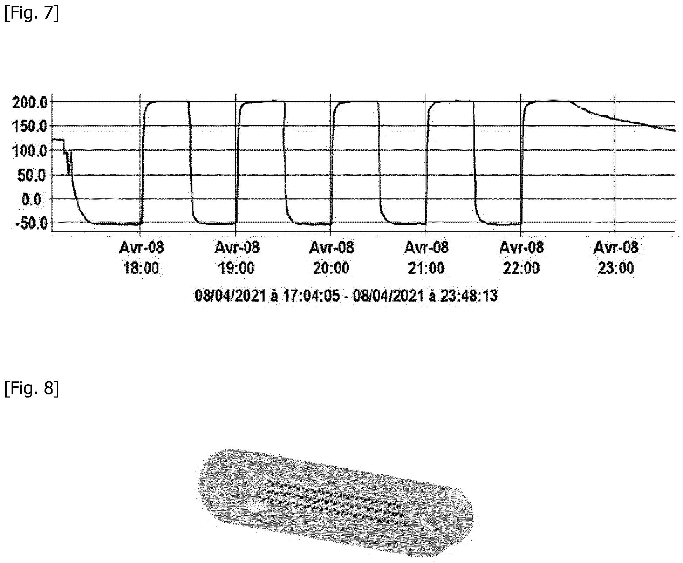

Puis on réalise le test de 5 chocs thermiques au-delà de la plage -55°C à +125°C, plus précisément de -55°C à +135°C, de -55°C à +150°C, de -55°C à +160°C, de -55°C à +175°C et voire de -55°C à +200°C (cf. Figure 7). Il est constaté qu'aucune baisse du niveau d'herméticité à 5×10⁻¹² mbar.l/s n'est observée sur le lot après ces épreuves thermiques.

Quant au test de vieillissement thermique à 230°C pendant 150 h, l'évaluation en herméticité du lot après le test montre que le niveau d'herméticité est bien conservé.

Ainsi on valide la faisabilité de réalisation des connecteurs micro-D hermétiques en aluminium par scellement métal-verre-métal utilisant le système TZN (composition de verre selon l'invention).

### Exemple 7 : lot de connecteurs micro-D 51 points en 3 rangées dont le verre a la composition selon l'invention (TeO₂72%-ZnO16%-Na₂O12%)

En passant de 15 points à 51 points on réalise un lot de 4 connecteurs micro-D (cf. Figure 8) constitués de :
- 51 contacts en alliage CuBe revêtus d'une sous-couche de nickel d'épaisseur de 1,27 µm minimum et une couche d'or d'épaisseur 1,27 µm minimum.
- 51 inserts isolants en verre d'une composition nominale (TeO₂-72%, ZnO-16%, Na₂O-12%).
- 1 boîtier en alliage d'aluminium 5083 nickelé, d'épaisseur de nickel comprise entre 15 µm et 18 µm.

L'assemblage du connecteur est obtenu par une opération de scellement métal-verre-métal à 365°C pendant 1h. Le lot de connecteurs obtenu est conforme à la norme Mil-DTL-83513 (décembre 2020) et présente le niveau d'herméticité inférieur à 5×10⁻¹² mbar.l/s.

Les résultats des tests précités dans le Tableau 1 sur le lot montrent que l'ensemble des connecteurs est conforme à la norme Mil-DTL-83513 (décembre 2020).

### Exemple 8 : lot de connecteurs micro-D 51 points en 3 rangées dont le verre a la composition selon l'invention (TeO₂750%-ZnO15%-Na₂O10%)

On réalise un lot de 2 connecteurs micro-D (cf. Figure 8) constitués de :
- 51 contacts en alliage CuZn revêtus d'une sous-couche de nickel d'épaisseur de 1,27 µm minimum et une couche d'or d'épaisseur 1,27 µm minimum.
- 51 inserts isolants en verre d'une composition nominale (TeO₂-75%, ZnO-15%, Na₂O-10%).
- 1 boîtier en acier inoxydable 316 passivé.

Les résultats des tests précités dans le Tableau 1 sur le lot montrent que l'ensemble des connecteurs est conforme à la norme Mil-DTL-83513 (décembre 2020).

Ainsi on valide la faisabilité de réalisation des connecteurs micro-D hermétiques en acier inoxydable par scellement métal-verre-métal utilisant le système TZN (composition de verre selon l'invention).

L'ensemble des exemples précités est résumé dans un tableau 4 ci-dessous.

**[Tableau 4]**

| **Exemple** | **Connecteur** | **Contact** | **Verre** | **Boîtier** |
|---|---|---|---|---|
| 1 | Nano-D 15p | CuBe | TeO₂75%-ZnO15%-Na₂O10% | Al 5083 |
| 2 | Nano-D 15p | AuAgCu | TeO₂80%-ZnO10%-Na₂O10% | Al 5083 |
| 3 | Nano-D 37p | CuZn | TeO₂70%-ZnO18%-Na₂O12% | Al 5083 |
| 4 | Nano-D 37p | AuAqCu | TeO₂68%-ZnO17%-Na₂O15% | Al 6061 |
| 5 | Nano-D 37p | AuAgCu | TeO₂75%-ZnO15%-Na₂O10% | Inox 304 |
| 6 | Micro-D 15p | CuBe | TeO₂80%-ZnO10%-Na₂O10% | Al 6061 |
| 7 | Micro-D 51p | CuBe | TeO₂75%-ZnO15%-Na₂O10% | Al 5083 |
| 8 | Micro-D 51p | CuZn | TeO₂72%-ZnO16%-Na₂O12% | Inox 316 |

Les exemples démontrent ainsi que l'on peut obtenir une version hermétique des connecteurs nano-D et micro-D en alliage d'aluminium ou en acier inoxydable conformes respectivement aux normes Mil-DTL-32139 (avril 2021) et Mil-DTL-83513 (décembre 2020) grâce à un scellement métal-verre-métal innovant utilisant le système de verre TZN (composition de verre selon l'invention).

Lesdits connecteurs nano-D et micro-D hermétiques ont été réalisés en assemblant par le scellement métal-verre-métal un boîtier en aluminium série 5000 ou 6000 revêtus d'une sous-couche de nickel, ou en acier inoxydable 304 ou 316, des inserts isolants en verre TZN (composition de verre selon l'invention) et des contacts en CuBe ou en laiton CuZn revêtus d'une sous-couche de nickel et d'une couche d'or, ou encore en alliage de métaux précieux AuAgCu. Ces connecteurs miniatures présentent une excellente herméticité inférieure à 10⁻¹² mbar.l/s suivant la norme Mil-STD-883-1024 (septembre 2019) et en particulier conservent cette performance après les tests stipulés dans lesdites normes, ainsi que les tests de chocs et de vieillissement thermiques.

Le système de verre TZN (composition de verre selon l'invention) est donc particulièrement intéressant pour réaliser des connecteurs miniatures hermétiques en alliage d'aluminium.

En conclusion l'invention présentée constitue une avancée technologique significative dans le domaine de la connectique hermétique.

## Revendications

1. Composition de verre à base d'oxyde de tellure pour le
scellement métal-verre-métal d'alliages ou de métaux ayant un coefficient de dilatation thermique supérieur à 16ppm/°C, ladite composition comprenant, avantageusement étant constituée par, en pourcentage molaire :
- de 60,0 à 85,0 % deTeO₂, avantageusement de 65,0 à 83,0 % ;
- de 10,0 à 30,0 % de ZnO, avantageusement de 10,0 à 20,0 % ;
- de 8,0 à 20,0% de Na₂O,
- et les éventuelles impuretés inévitables
ladite composition étant essentiellement exempte d'oxyde de plomb, d'oxyde de titane, d'oxyde de vanadium, d'oxyde de bismuth et d'oxyde de lanthane et étant exempte d'oxyde aluminium.

2. Composition de verre selon la revendication 1,
**caractérisée en ce que** l'alliage ou le métal ayant un coefficient de dilatation thermique supérieur à 16ppm/°C est choisi dans le groupe constitué par l'aluminium, les alliages d'aluminium, éventuellement nickelés, avantageusement un alliage aluminium magnésium ou aluminium magnésium silicium, éventuellement nickelés, les aciers inoxydables, le cuivre, les alliages de cuivre, éventuellement nickelés ou nickelés-dorés, avantageusement un alliage cuivre béryllium ou cuivre zinc, éventuellement nickelé ou nickelé-doré, et les alliages de métaux précieux, avantageusement un alliage or argent cuivre.

3. Composition de verre selon l'une quelconque des
revendications 1 ou 2, **caractérisée en ce que** son coefficient de dilatation thermique CTE est compris entre 17 ppm/°C et 20 ppm/°C.

4. Composition de verre selon l'une quelconque des
revendications 1 à 3, **caractérisée en ce que** sa température de transition vitreuse Tg est comprise entre 280°C et 285°C.

5. Utilisation de la composition de verre selon l'une
quelconque des revendications 1 à 4 pour le scellement métal-verre-métal :
- du cuivre ou d'un alliage de cuivre ou d'un alliage de métaux précieux, avantageusement un alliage cuivre béryllium ou cuivre zinc ou or argent cuivre, le cuivre ou l'alliage de cuivre étant éventuellement nickelé ou nickelé-doré, avec
- un alliage ou un métal ayant un coefficient de dilatation thermique supérieur à 16ppm/°C, en particulier autre que du cuivre ou qu'un alliage de cuivre ou qu'un alliage de métaux précieux.

6. Utilisation selon la revendication 5, **caractérisée en ce que** l'alliage ou métal ayant un coefficient de dilatation thermique supérieur à 16ppm/°C autre que du cuivre ou qu'un alliage de cuivre ou qu'un alliage de métaux précieux est choisi dans le groupe constitué par l'aluminium, les alliages de l'aluminium, éventuellement nickelés, et les aciers inoxydables, avantageusement il s'agit d'un alliage d'aluminium, éventuellement nickelés, choisi dans le groupe constitué par un alliage aluminium magnésium silicium et un alliage aluminium magnésium, ou d'un acier inoxydable.

7. Utilisation selon l'une quelconque des revendications 5 ou 6, **caractérisé en ce que** le scellement métal-verre-métal est effectué dans un connecteur, avantageusement un connecteur micro-D ou nano-D, en particulier nano-D, entre :
- un contact en cuivre ou en alliage de cuivre ou en alliage de métaux précieux, le cuivre ou l'alliage de cuivre étant éventuellement nickelé ou nickelé-doré, et
- un boîtier en alliage ou métal ayant un coefficient de dilatation thermique supérieur à 16ppm/°C, en particulier autre que du cuivre ou qu'un alliage de cuivre ou qu'un alliage de métaux précieux.

8. Connecteur comprenant :
- un contact en cuivre ou en alliage de cuivre ou en alliage de métaux précieux, avantageusement en alliage cuivre béryllium ou cuivre zinc ou or argent cuivre, le cuivre ou l'alliage de cuivre étant éventuellement nickelé ou nickelé-doré,
- un boîtier en métal ou alliage ayant un coefficient de dilatation thermique supérieur à 16ppm/°C, en particulier autre que du cuivre ou qu'un alliage de cuivre ou qu'un alliage de métaux précieux, et
- un matériau de scellement métal-verre-métal entre le contact et le boîtier, **caractérisé en ce que** le matériau de scellement est un verre à base d'oxyde de tellure ayant la composition telle que définie dans l'une quelconque des revendications 1 à 4.

9. Connecteur selon la revendication 8, **caractérisé en ce que** l'alliage ou métal ayant un coefficient de dilatation thermique supérieur à 16ppm/°C est choisi dans le groupe constitué par l'aluminium, les alliages d'aluminium, éventuellement nickelé, et les aciers inoxydables, avantageusement il s'agit d'un alliage d'aluminium, éventuellement nickelé, choisi dans le groupe constitué par un alliage aluminium magnésium et un alliage aluminium magnésium silicium, ou d'un acier inoxydable.

10. Connecteur selon l'une quelconque des revendications 8 ou 9, **caractérisé en ce qu'**il s'agit d'un connecteur micro-D ou nano-D, avantageusement d'un connecteur nano-D.

11. Connecteur selon l'une quelconque des revendications 8 à 10, **caractérisé en ce qu'**il est hermétique avec un taux de fuite à l'hélium inférieur à 5×10⁻¹² mbar.l/s.

12. Procédé de scellement métal-verre-métal d'un contact en cuivre ou en alliage de cuivre ou en alliage de métaux précieux, le cuivre ou l'alliage de cuivre étant éventuellement nickelé ou nickelé-doré, dans un boîtier en métal ou alliage ayant un coefficient de dilatation thermique supérieur à 16ppm/°C, en particulier autre que du cuivre ou qu'un alliage de cuivre ou qu'un alliage de métaux précieux, comprenant les étapes successives suivantes :
- a) fourniture d'un contact en cuivre ou en alliage de cuivre ou en alliage de métaux précieux, le cuivre ou l'alliage de cuivre étant éventuellement nickelé ou nickelé-doré, et d'un boîtier en métal ou alliage ayant un coefficient de dilatation thermique supérieur à 16ppm/°C, en particulier autre que du cuivre ou qu'un alliage de cuivre ou qu'un alliage de métaux précieux ;
- b) fourniture d'une préforme de verre à base d'oxyde de tellure ayant la composition telle que définie dans l'une quelconque des revendications 1 à 4 ;
- c) mise en contact de la préforme avec le contact et avec le boîtier;
- d) maintien du contact de l'ensemble contact - préforme - boîtier à l'aide d'un outillage adapté ;
- e) chauffage de l'ensemble contact - préforme - boîtier à une température et pendant un temps suffisant pour obtenir le scellement métal-verre-métal;
- f) récupération de l'ensemble ainsi scellé.

13. Procédé selon la revendication 12, **caractérisé en ce que** la température de l'étape e) est comprise entre 300°C et 380°C.

14. Procédé selon les revendications 12 ou 13, **caractérisé en ce que** la durée de l'étape e) est comprise entre 30 minutes et 200 minutes.
